# EUROPEAN PATENT SPECIFICATION

(11) **EP 4 510 366 B1**
(45) Date of publication and mention of the grant of the patent: **11.03.2026**
(21) Application number: 22963945.5
(22) Date of filing: 03.11.2022
(51) Int. Cl.: H01M 50/107, H01M 50/152, H01M 50/169, H01M 50/178, H01M 50/531

(54) **BATTERY CELL, BATTERY, AND ELECTRIC APPARATUS**
BATTERIEZELLE, BATTERIE UND ELEKTRISCHE VORRICHTUNG
ÉLÉMENT DE BATTERIE, BATTERIE ET APPAREIL ÉLECTRIQUE

(43) Date of publication of application: 19.02.2025
(73) Proprietor: Contemporary Amperex Technology (Hong Kong) Limited, Hong Kong (HK)
(72) Inventor: MENG, Hao, Ningde, Fujian 352100 (CN); ZHU, Wenqi, Ningde, Fujian 352100 (CN); WEN, Yuqian, Ningde, Fujian 352100 (CN)
(74) Representative: Lorenz Seidler Gossel Part. mbB
(86) International application number: PCT/CN2022/129608
(87) International publication number: WO 2024/092634

(56) References cited:
- CN-A- 114 094 162
- CN-A- 114 094 162
- CN-A- 114 122 635
- CN-U- 216 085 065
- CN-U- 216 085 200
- CN-U- 216 120 647
- CN-U- 216 120 648
- CN-U- 216 120 648
- CN-U- 216 250 920
- CN-U- 217 158 556

## Description

### TECHNICAL FIELD

This application relates to the technical field of batteries, and in particular, to a battery cell, a battery, and an electrical device.

### BACKGROUND

Battery cells are widely used in electronic devices such as a mobile phone, a notebook computer, an electric power cart, an electric vehicle, an electric airplane, an electric ship, an electric toy car, an electric toy ship, an electric toy airplane, and a power tool. In the development of battery technology, attention needs to be focused not only on the performance of the battery cell, but also on the yield rate of the battery cell. However, currently, damage to an electrode assembly is prone to occur in a process of assembling a battery cell, thereby leading to a decrease in the yield rate of the battery cell. Furthermore, various prior art documents CN 216 085 065 U, CN 216 085 200 U, CN 114 094 162 A and CN 216 120 648 U address either heat exchanger diagnostics in stationary industrial systems or structural designs of battery cells aimed at improving electrical connectivity and sealing. However, none of these disclosures solve the problem of preventing damage to the electrode assembly during battery cell assembly while simultaneously improving yield and structural reliability.

### TECHNICAL PROBLEMS

One of objectives of embodiments of this application is to provide a battery cell, a battery, and an electrical device, so as to solve a technical problem in the related art: damage to an electrode assembly is prone to occur in a process of assembling the battery cell and leads to a decrease in the yield rate of the battery cell.

### TECHNICAL SOLUTIONS

A technical solution disclosed in an embodiment of this application is as follows:
According to a first aspect, an embodiment of this application provides a battery cell. The battery cell includes a housing, an electrode assembly, and a current collecting component. Both the electrode assembly and the current collecting component are accommodated in the housing. The current collecting component is electrically connected to the electrode assembly. The current collecting component includes a body portion and a first turned edge disposed around the body portion. The first turned edge protrudes away from the electrode assembly from the body portion. The first turned edge is welded to an inner peripheral wall of the housing.

The battery cell disclosed herein brings at least the following beneficial effects: in the battery cell disclosed herein, by disposing the first turned edge around the body portion and extending the first turned edge away from the electrode assembly from the body portion, the distance can be increased from the electrode assembly to a weld joint between the current collecting component and an inner wall of the housing, thereby effectively reducing the heat transferred to the electrode assembly. This prevents the electrode assembly from being damaged by heat, thereby effectively improving the yield rate of the battery cell.

In some embodiments of this application, the first turned edge includes a connecting face welded to the inner peripheral wall of the housing. A dimension of the connecting face along a thickness direction of the body portion is larger than a thickness dimension of the body portion.

The above technical solution can increase an welding area between the current collecting component and the inner wall of the housing, thereby effectively increasing the strength of assembling between the current collecting component and the housing.

In some embodiments of this application, a chamfer structure is disposed on one side of the current collecting component, the side being close to the electrode assembly. The chamfer structure is disposed on an outer peripheral edge of the current collecting component.

Based on the above technical solution, when the peripheral wall of the housing touches the outer peripheral edge of the current collecting component, the current collecting component can be fitted into the housing along the inclination direction of the chamfer structure. In this way, the current collecting component can be fitted into the housing quickly, thereby effectively improving the assembling efficiency of the battery cell.

In some embodiments of this application, the first turned edge extends obliquely from the body portion away from a central axis of the body portion to form the chamfer structure. The first turned edge presses against an inner wall of the housing.

Based on the above technical solution, after the current collecting component is fitted into the housing, the first turned edge presses against the inner peripheral wall of the housing, and causes the first turned edge to deform toward the central axis of the body portion to some extent. In this case, the first turned edge is tightly pressed against and fixed to the housing, thereby serving a function of pre-positioning the current collecting component and facilitating the operation of welding between the current collecting component and the housing. In addition, the first turned edge presses against the inner peripheral wall of the housing, and effectively seals the clearance between the current collecting component and the inner wall of the housing. This effectively prevents the welding slag from falling onto the electrode assembly and causing damage to the electrode assembly, and further improves the yield rate of the battery cell.

According to the invention, the battery cell further includes an end cap. The housing includes an opening end. The end cap fits and covers the opening end. The current collecting component is configured to support the end cap.

Based on the above technical solution, the current collecting component not only plays a role in leading out the current of the electrode assembly to the housing, but also plays a role in supporting the end cap, so as to be ready for providing a supporting force for a subsequent operation of sealing the housing. In this way, without a need to additionally dispose on the housing a roller track structure for supporting the end cap, the technical solution vacates the space occupied by the roller track structure inside the housing, and effectively improves the space utilization rate inside the battery cell, thereby effectively increasing the energy density of the battery cell.

In some embodiments of this application, a sealing layer is disposed between the end cap and the housing.

The above technical solution effectively seals the clearance between the end cap and the housing, thereby effectively improving the hermeticity of the battery cell.

In some embodiments of this application, the sealing layer is a hot-melt adhesive layer.

Based on the above technical solution, the hot-melt adhesive layer can effectively fill the clearance between the end cap and the housing, thereby more effectively sealing the clearance between the end cap and the housing, and further improving the hermeticity of the battery cell.

In some embodiments of this application, an edge of the opening end is folded toward the interior of the housing to form a second turned edge. The second turned edge presses against the end cap.

Based on the above technical solution, the second turned edge can mate with the current collecting component to clamp the end cap, so as to prevent the end cap from falling off from the housing. This effectively increases the strength of assembling between the end cap and the housing, and in turn, effectively improves the pressure resistance of the battery cell.

In some embodiments of this application, a surface, away from the current collecting component, of the end cap is flush with a surface, away from the current collecting component, of the second turned edge; or a surface, away from the current collecting component, of the end cap is indented from a surface, away from the current collecting component, of the second turned edge.

Based on the above technical solution, the end cap is caused not to protrude out of the second turned edge, thereby reducing the risk of damage caused to the end cap by collision with an external object, and in turn, effectively improving the reliability of the battery cell in use.

In some embodiments of this application, a sealing layer is disposed between the end cap and the second turned edge.

The above technical solution effectively seals the clearance between the end cap and the second turned edge, thereby effectively improving the hermeticity of the battery cell.

In some embodiments of this application, the sealing layer is a hot-melt adhesive layer.

Based on the above technical solution, the hot-melt adhesive layer can effectively fill the clearance between the end cap and the second turned edge, thereby more effectively sealing the clearance between the end cap and the second turned edge, and further improving the hermeticity of the battery cell.

According to the invention, the end cap is supported on the first turned edge so that the end cap is partitioned off from the body portion to form a cushion space.

Based on the above technical solution, in sealing the housing, the cushion space can cushion the force between the end cap and the current collecting component to some extent, and effectively reduce the risk of fracturing at a weld joint between the current collecting component and the housing, thereby further improving the yield rate of the battery cell.

In some embodiments of this application, the battery cell further includes a cushion. The cushion abuts between the end cap and the current collecting component.

Based on the above technical solution, in sealing the housing, a squeezing force is transmitted through the end cap to the cushion, so that the cushion deforms in response to the force to cushion the force between the end cap and the current collecting component to some extent, thereby effectively reducing the risk of fracturing at the weld joint between the current collecting component and the housing, and in turn, further improving the yield rate of the battery cell.

In some embodiments of this application, the current collecting component protrudes out on a side close to the end cap to form a first cushion portion. The first cushion portion abuts against the end cap.

Based on the above technical solution, in sealing the housing, the squeezing force is transmitted through the end cap to the first cushion portion. In this way, the first cushion portion deforms in response to the force to cushion the force between the end cap and the current collecting component to some extent. This effectively reduces the risk of fracturing at the weld joint between the current collecting component and the housing, thereby further improving the yield rate of the battery cell.

In some embodiments of this application, the end cap protrudes out on a side close to the current collecting component to form a second cushion portion. The second cushion portion abuts against the current collecting component.

Based on the above technical solution, in sealing the housing, a squeezing force is transmitted through the end cap to the second cushion portion, so that the second cushion portion deforms in response to the force to cushion the force between the end cap and the current collecting component to some extent, thereby effectively reducing the risk of fracturing at the weld joint between the current collecting component and the housing, and in turn, further improving the yield rate of the battery cell.

In some embodiments of this application, the end cap is recessed on a side close to the current collecting component to form a cavity.

Based on the above technical solution, the internal space of the battery cell is effectively increased, so that more electrolyte solution can be stored inside the battery cell, thereby effectively improving the charge-discharge cycle performance of the battery cell.

In some embodiments of this application, a surface, away from the current collecting component, of the end cap is flush with an end face of the opening end; or a surface, away from the current collecting component, of the end cap is recessed in the opening end.

Based on the above technical solution, the end cap is caused not to protrude out of the opening end of the housing, thereby reducing the risk of damage caused to the end cap by collision with an external object, and in turn, effectively improving the reliability of the battery cell in use.

According to a second aspect, an embodiment of this application provides a battery. The battery includes the battery cell disclosed in any one of the foregoing embodiments.

The beneficial effects of the battery according to this embodiment of this application are: The battery according this embodiment of this application contains the battery cell according to any one of the foregoing embodiments, thereby effectively improving the yield rate of the battery.

According to a third aspect, an embodiment of this application provides an electrical device. The electrical device includes the battery.

The beneficial effects of the electrical device according this embodiment of this application are: The electrical device according this embodiment of this application contains the battery described above, thereby effectively improving the yield rate of the electrical device.

### BRIEF DESCRIPTION OF DRAWINGS

To describe the technical solutions in some embodiments of this application more clearly, the following outlines the drawings to be used in the description of some exemplary embodiments of this application. Evidently, the drawings outlined below are merely some embodiments of this application. A person of ordinary skill in the art may derive other drawings from such drawings without making any creative efforts.
FIG. 1 is a schematic structural diagram of a vehicle according to an embodiment of this application;
FIG. 2 is a schematic structural diagram of a battery according to an embodiment of this application;
FIG. 3 is a schematic structural diagram of a battery cell according to an embodiment of this application;
FIG. 4 is a cross-sectional view of a structure of the battery cell shown in FIG. 3 and sectioned along an A-A line;
FIG. 5 is a schematic structural diagram of a current collecting component in the battery cell shown in FIG. 4;
FIG 6 is a close-up view of a schematic structure of a part B in the battery cell shown in FIG. 4;
FIG. 7 is a schematic diagram of a local structure of a battery cell;
FIG. 8 is a schematic diagram of a local structure of a battery cell according to still another embodiment of this application;
FIG. 9 is a schematic diagram of a local structure of a battery cell according to yet another embodiment of this application; and
FIG. 10 is a schematic diagram of a local structure of a battery cell according to yet another embodiment of this application.

List of reference numerals:
1000. vehicle;
100. battery;
10. box; 11. accommodation space;
20. battery cell; 21. housing; 211. opening end; 2111. second turned edge; 22. electrode assembly; 221. tab; 23. current collecting component; 231. body portion; 2311. first surface; 2312. second surface; 232. first turned edge; 2321. connecting face; 233. chamfer structure; 234. central axis; 235. first cushion portion; 24. end cap; 241. second cushion portion; 242. cavity; 25. sealing layer; 26. cushion; 27. cushion space;
200. controller;
300. motor.

### DETAILED DESCRIPTION OF EMBODIMENTS

To make the objectives, technical solutions, and advantages of this application clearer, the following describes this application in further detail with reference to drawings and embodiments. Understandably, the specific embodiments described herein are merely intended to explain this application, but not to limit this application.

It is hereby noted that a component referred to as being "fixed to" or "disposed on" another component may be directly positioned onto the other component or may be positioned onto the other component indirectly through an intermediate component. A component referred to as "connected to" another component may be directly or indirectly connected to the other component. A direction or a positional relationship indicated by the terms such as "up", "down", "left", and "right" is a direction or positional relationship based on the illustration in the drawings, and is merely intended for ease of description but without indicating or implying that the indicated apparatus or component is necessarily located in the specified direction or constructed or operated in the specified direction. Therefore, such terms do not constitute any limitation on this application. A person of ordinary skill in the art may understand the specific meanings of such terms depending on specific situations. The terms "first" and "second" are used merely for ease of description, but without indicating or implying relative importance or implicitly specifying the number of technical features. Unless otherwise expressly specified, "a plurality of" means two or more.

A battery cell is a minimum electrical energy storage unit containing a housing, an electrode assembly, and a current collecting component. Both the electrode assembly and the current collecting component are accommodated in the housing. The electrode assembly includes a positive electrode plate, a negative electrode plate, and a separator. The separator is configured to dielectrically separate the positive electrode plate from the negative electrode plate. The positive electrode plate or the negative electrode plate is electrically connected to the current collecting component. The current collecting component is welded to an inner wall of the housing, so that the current collecting component can lead the current of the electrode assembly out to the housing.

The applicant hereof has noticed that, because the current collecting component is typically a flat plate structure, and both the thickness of the current collecting component and the thickness of the wall of the housing are relatively large. In order to ensure the stability of assembling of the current collecting component, a welding operation on a junction between the current collecting component and the housing needs to be performed for a long time. Therefore, a large amount of heat is generated in a process of welding the current collecting component to the housing. In addition, the separator of the electrode assembly is at a relatively small distance from a weld joint between the current collecting component and the housing, and the heat is prone to be transferred to the separator to thermally damage the separator. After the separator is damaged, the insulation between the positive electrode plate and the negative electrode plate fails, thereby resulting in a short circuit of the electrode assembly and decreasing the yield rate of the battery cell.

To increase the yield rate of the battery cell, through in-depth research, the applicant hereof designs a battery cell. In the battery cell, by disposing a first turned edge around a body portion and extending the first turned edge away from the electrode assembly from the body portion, the distance can be increased from the electrode assembly to a weld joint between the current collecting component and an inner wall of the housing, thereby effectively reducing the heat transferred to the electrode assembly. This prevents the electrode assembly from being damaged by heat, thereby effectively improving the yield rate of the battery cell.

The battery cell disclosed in an embodiment of this application is applicable to an electrical device that uses a battery as a power supply or various energy storage systems that use a battery as an energy storage unit. The electrical devices may be, but are not limited to, a mobile phone, a tablet, a notebook computer, an electric toy, an electric tool, an electric power cart, an electric vehicle, a ship, a spacecraft, or the like. The electric toy may include stationary or mobile electric toys, such as a game console, an electric car toy, an electric ship toy, an electric airplane toy, and the like. The spacecraft may include an airplane, a rocket, a space shuttle, a spaceship, and the like.

For ease of description in the following embodiments, a vehicle 1000 is used as an example of the electrical device according to an embodiment of this application.

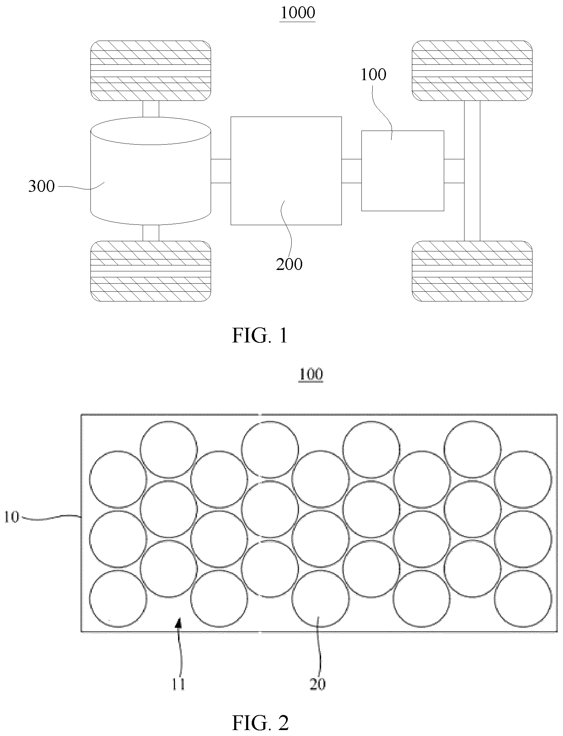

Referring to FIG. 1, FIG. 1 is a schematic structural diagram of a vehicle 1000 according to an embodiment of this application. The vehicle 1000 may be an oil-fueled vehicle, a natural gas vehicle, or a new energy vehicle. The new energy vehicle may be a battery electric vehicle, a hybrid electric vehicle, a range-extended electric vehicle, or the like. A battery 100 is disposed inside the vehicle 1000. The battery 100 may be disposed at the bottom, front, or rear of the vehicle 1000. The battery 100 may be configured to supply power to the vehicle 1000. For example, the battery 100 may serve as an operating power supply of the vehicle 1000. The vehicle 1000 may further include a controller 200 and a motor 300. The controller 200 is configured to control the battery 100 to supply power to the motor 300, for example, to meet electrical energy requirements in starting, navigating, or running the vehicle 1000.

In some embodiments of this application, the battery 100 serves not only as an operating power supply of the vehicle 1000, but may also serve as a driving power supply of the vehicle 1000 to provide driving power for the vehicle 1000 in place of or partly in place of fuel oil or natural gas.

Referring to FIG. 2, FIG. 2 is a schematic structural diagram of a battery 100 according to an embodiment of this application. The battery 100 includes a box 10 and a battery cell 20. The battery cell 20 is accommodated in the box 10. The box 10 is configured to provide an accommodation space 11 for the battery cell 20. The box 10 may be in various structures. In some embodiments, the box 10 may include a first part and a second part. The first part and the second part fit and cover each other. The first part and the second part together define an accommodation space 11 configured to accommodate the battery cell 20. The second part may be a hollow structure opened at one end. The first part may be a plate-like structure. The first part fits and covers an opening side of the second part so that the first part and the second part jointly define the accommodation space 11. Alternatively, the first part and the second part may be hollow structures each opened at one side. The opening side of the first part fits and covers the opening side of the second part. Definitely, the box 10 formed by the first part and the second part may be in various shapes, such as a cylinder or a cuboid.

The battery 100 may contain a plurality of battery cells 20. The plurality of battery cells 20 may be connected in series, parallel, or series-and-parallel pattern. The series-and-parallel pattern means a combination of series connection and parallel connection of the plurality of battery cells 20. The plurality of battery cells 20 may be directly connected in series, parallel, or series-and-parallel pattern, and then the whole of the plurality of battery cells 20 may be accommodated in the box 10. Alternatively, the plurality of battery cells 20 are connected in series, parallel, or series-and-parallel pattern to form a battery module first, and then a plurality of battery modules are connected in series, parallel, or series-and-parallel pattern to form an entire battery 100 for being accommodated in the box 10. The battery 100 may further include other structures. For example, the battery 100 may further include a busbar component. The busbar component is configured to implement electrical connection between the plurality of battery cells 20.

Each battery cell 20 may be, but is not limited to, a secondary battery or primary battery; or, may be a lithium-sulfur battery, a sodium-ion battery, or a magnesium-ion battery.

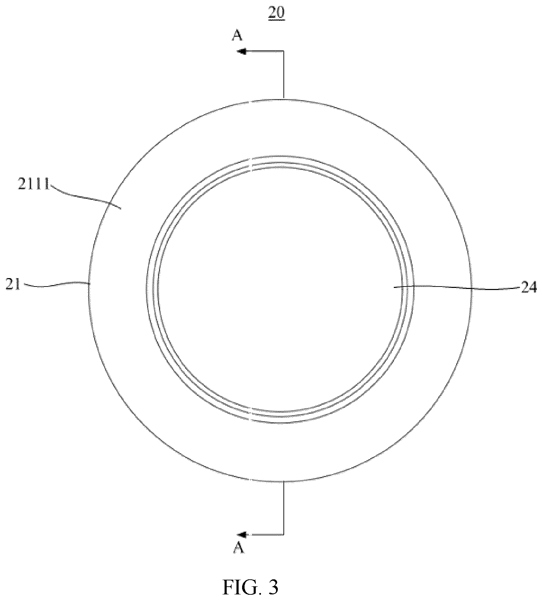

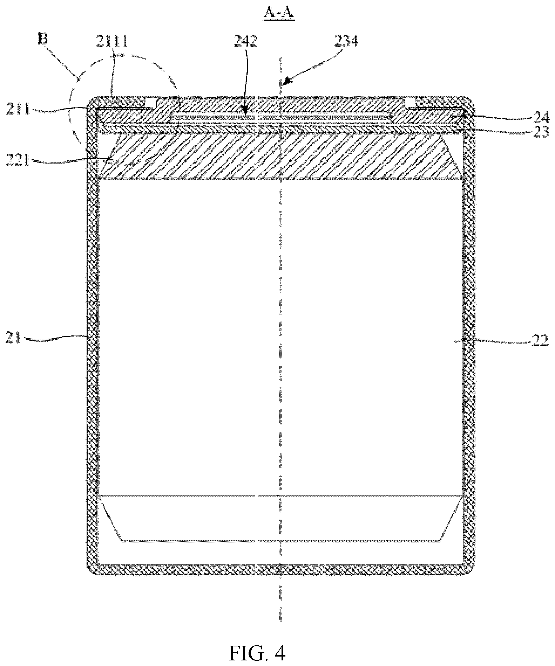

Referring to FIG. 3 and FIG. 4, FIG. 3 is a schematic structural top view of a battery cell 20 according tothe present application, and FIG. 4 is a cross-sectional view of a structure of the battery cell 20 shown in FIG. 3 and sectioned along an A-A line. The battery cell 20 includes a housing 21, an electrode assembly 22, and a current collecting component 23. Both the electrode assembly 22 and the current collecting component 23 are accommodated in the housing 21. The current collecting component 23 is electrically connected to the electrode assembly 22. The current collecting component 23 is welded to an inner wall of the housing 21.

The housing 21 is a component configured to provide an internal environment of the battery cell 20. The internal environment may be used for accommodating the electrode assembly 22, the current collecting component 23, an electrolyte solution, and other components. The housing 21 may be a stand-alone component. An opening may be created on the housing 21. The components such as the electrode assembly 22 and the current collecting component 23 are fitted into the inner environment through the opening of the housing 21. Optionally, the housing 21 may be made of a variety of materials such as copper, iron, aluminum, stainless steel, or aluminum alloy, without being particularly limited herein.

The electrode assembly 22 is a component in which electrochemical reactions occur in the battery cell 20. The electrode assembly 22 is mainly formed by winding or stacking a positive electrode plate, a negative electrode plate, and a separator layer. The separator is configured to dielectrically separate the positive electrode plate from the negative electrode plate. The parts, coated with an active material, of the positive electrode plate and the negative electrode plate, constitute a body portion of the electrode assembly 22. The part, coated with no active material, of the positive electrode plate, constitutes a tab 221, that is, a positive tab. The part, coated with no active material, of the negative electrode plate, constitutes a tab 221, that is, a negative tab. The positive tab and the negative tab may be located together at one end of the body portion of the electrode assembly 22 or located at two ends of the body portion of the electrode assembly 22 respectively. In a charge-discharge process of the battery cell 20, the positive active material and the negative active material react with an electrolyte solution. The positive tab or negative tab is electrically connected to the current collecting component 23, so that the current of the electrode assembly 22 is led out through the current collecting component 23.

The current collecting component 23 is a conductive connection medium between the housing 21 and the electrode assembly 22. The current collecting component 23 serves to lead the current of the electrode assembly 22 out to the housing 21 to implement the electrical connection between the housing 21 and the electrode assembly 22. Specifically, the current collecting component 23 may be connected to the tab 221 of the electrode assembly 22 by welding, abutting, bonding, or other means to implement the electrical connection between the current collecting component 23 and the electrode assembly 22. Optionally, the current collecting component 23 may be made of a variety of materials such as copper, iron, aluminum, steel, or aluminum alloy. The current collecting component 23 may assume various shapes such as circular, polygonal, or other shapes. The shape of the current collecting component 23 may be adapted to the shape of the cross-section of the housing 21 to fit the housing 21. For example, when the shape of the current collecting component 23 is circular, the shape of the cross-section of the housing 21 is also circular; or, when the shape of the current collecting component 23 is polygonal, the shape of the cross-section of the housing 21 is also polygonal.

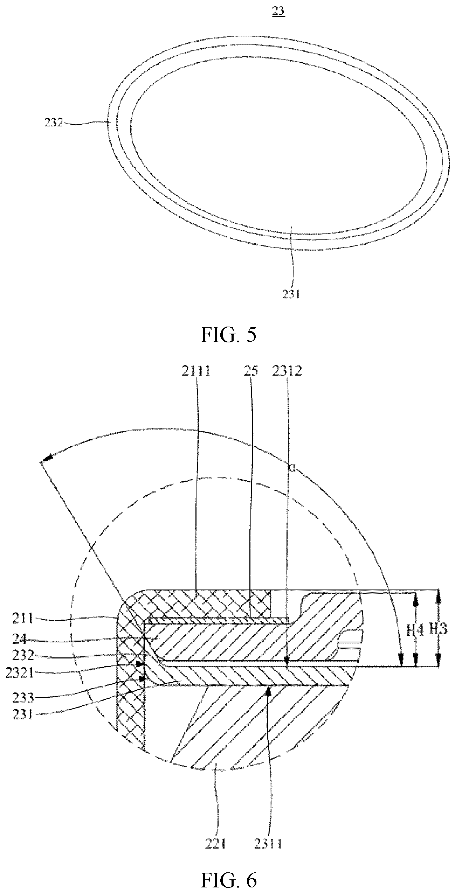

Referring to FIG. 5 and FIG. 6, the current collecting component 23 includes a body portion 231 and a first turned edge 232. The first turned edge 232 is disposed around the body portion 231. The first turned edge 232 protrudes away from the electrode assembly 22 from the body portion 231. The first turned edge 232 is welded to an inner peripheral wall of the housing 21.

The body portion 231 is a part, electrically connected to the electrode assembly 22, of the current collecting component 23.

The first turned edge 232 is a part, disposed at an angle to the body portion 231, of the current collecting component 23. The angle may be one of an acute angle, an obtuse angle, or a right angle. The first turned edge 232 is used as a part at which the current collecting component 23 is welded to the inner wall of the housing 21. The current of the electrode assembly 22 is led out to the housing 21 through the body portion 231 and the first turned edge 232 in sequence.

That the first turned edge 232 is disposed around the body portion 231 means that the first turned edge 232 extends along an outer peripheral edge of the body portion 231 and closes to form an ring structure. For ease of description, the inner space of the ring structure may be referred to as an inner ring space of the first turned edge 232, and the outer space of the ring structure may be referred to as an outer ring space of the first turned edge 232. The part, located in the outer ring space, of the first turned edge 232, is welded to the inner wall of the housing 21.

For ease of description, a surface, directly facing the electrode assembly 22, of the body portion 231 may be referred to as a first surface 2311, and a surface oriented away from the electrode assembly 22, of the body portion 231 may be referred to as a second surface 2312. That the first turned edge 232 protrudes away from the electrode assembly 22 from the body portion 231 means that the first turned edge 232 protrudes beyond the second surface 2312 of the body portion 231 away from the electrode assembly 22.

It is hereby noted that the current collecting component 23 may be molded in variety of manners. For example, the current collecting component 23 may be molded by stamping. That is, the first turned edge 232 is formed by pressing and folding the edge of the body portion 231. For another example, the current collecting component 23 may be molded in one piece by a casting process.

In the battery cell 20 disclosed herein, by disposing the first turned edge 232 around the body portion 231 and extending the first turned edge 232 away from the electrode assembly 22 from the body portion 231, the distance can be increased from the electrode assembly 22 to a weld joint between the current collecting component 23 and the inner wall of the housing 21, thereby effectively reducing the heat transferred to the electrode assembly 22. This prevents the electrode assembly 22 from being damaged by heat, thereby effectively improving the yield rate of the battery cell 20.

In some embodiments of this application, referring to FIG. 6, the first turned edge 232 includes a connecting face 2321 welded to the inner peripheral wall of the housing 21. A dimension of the connecting face 2321 along a thickness direction of the body portion 231 is larger than a thickness dimension of the body portion 231.

The connecting face 2321 is a part at which the first turned edge 232 is welded to the inner peripheral wall of the housing 21. The connecting face 2321 is parallel to the inner peripheral wall of the housing 21. However, allowing for a manufacturing tolerance, the connecting face 2321 may be slightly inclined against the inner peripheral wall of the housing 21.

The thickness direction of the body portion 231 means an extension direction of the central axis 234 of the body portion 231 shown in FIG. 3. Understandably, the thickness dimension of the body portion 231 is a dimension of the body portion 231 along the extension direction of the central axis 234. Similarly, the dimension of the connecting face 2321 along the thickness direction of the body portion 231 is a dimension of the connecting face 2321 along the extension direction of the central axis 234 of the body portion 231.

The above technical solution can increase an welding area between the current collecting component 23 and the inner wall of the housing 21, thereby effectively increasing the strength of assembling between the current collecting component 23 and the housing 21.

In some embodiments of this application, referring to FIG. 4 and FIG. 6, a chamfer structure 233 is disposed on one side of the current collecting component 23, the side being close to the electrode assembly 22. The chamfer structure 233 is disposed on an outer peripheral edge of the current collecting component 23.

The chamfer structure 233 is a bevel face formed at the outer peripheral edge of the current collecting component 23, where the bevel face extends away from the central axis 234 of the body portion 231 in a direction substantially from the first surface 2311 to the second surface 2312 of the body portion 231.

Based on the above technical solution, when the peripheral wall of the housing 21 touches the outer peripheral edge of the current collecting component 23, the current collecting component 23 can be fitted into the housing 21 along the inclination direction of the chamfer structure 233. In this way, the current collecting component 23 can be fitted into the housing 21 quickly, thereby effectively improving the assembling efficiency of the battery cell 20.

In some embodiments of this application, referring to FIG. 4 and FIG. 6, the first turned edge 232 extends obliquely from the body portion 231 away from the central axis 234 of the body portion 231 to form the chamfer structure 233. The first turned edge 232 presses against an inner wall of the housing 21.

The central axis 234 of the body portion 231 is an imaginary line that passes through a center point of the body portion 231 and extends along a direction perpendicular to the first surface 2311 and the second surface 2312 of the body portion 231. The central axis 234 of the body portion 231 is the central axis of the current collecting component 23.

The first turned edge 232 extends obliquely from the body portion 231 away from the central axis 234 of the body portion 231, so that the outer diameter of the current collecting component 23 gradually increases along the central axis 234 of the body portion 231 in a direction away from the second surface 2312 of the body portion 231. In other words, the angle α formed between the first turned edge 232 and the body portion 231 is an obtuse angle, and a wall face, oriented away from the inner ring space, of the first turned edge 232 is the bevel face.

It is hereby noted that the angle α formed between the first turned edge 232 and the body portion 231 may be set according to actual needs, and specifically may be 120°, 150°, or the like, without being particularly limited herein.

The maximum outer diameter of the current collecting component 23 is slightly larger than the inner diameter of the housing 21. In this way, after the current collecting component 23 is fitted into the housing 21, the first turned edge 232 presses against the inner wall of the housing 21. That is, the first turned edge 232 and the inner wall of the housing 21 press against each other.

Based on the above technical solution, after the current collecting component 23 is fitted into the housing 21, the first turned edge 232 presses against the inner peripheral wall of the housing 21, and causes the first turned edge 232 to deform toward the central axis 234 of the body portion 231 to some extent. In this case, the first turned edge 232 is tightly pressed against and fixed to the housing 21, thereby serving a function of pre-positioning the current collecting component 23 and facilitating the operation of welding between the current collecting component 23 and the housing 21. In addition, the first turned edge 232 presses against the inner peripheral wall of the housing 21, and effectively seals the clearance between the current collecting component 23 and the inner wall of the housing 21. This effectively prevents the welding slag from falling onto the electrode assembly 22 and causing damage to the electrode assembly 22, and further improves the yield rate of the battery cell 20.

Alternatively, in some other embodiments, the first turned edge 232 may be perpendicular to the body portion 231. The chamfer structure 233 is formed on one side of a junction between the first turned edge 232 and the body portion 231, the side being close to the electrode assembly 22.

In the presentapplication, referring to FIG. 4 and FIG. 6, the battery cell 20 further includes an end cap 24. The housing 21 includes an opening end 211. The end cap 24 fits and covers the opening end 211. The current collecting component 23 is configured to support the end cap 24.

The end cap 24 is a component that fits and covers the opening end 211 of the housing 21 to isolate the internal environment of the battery cell 20 from the external environment. The shape of the end cap 24 may be adapted to the shape of the cross-section of the housing 21 to fit the housing 21. In other words, the shape of the end cap 24, the shape of the current collecting component 23, and the shape of the cross-section of the housing 21 are substantially the same. Inthe present application, a pressure relief mechanism configured to release an internal pressure when the internal pressure or temperature of the battery cell 20 reaches a threshold may be disposed on the end cap 24. Optionally, the end cap 24 may be made of a material of appropriate hardness and strength (such as aluminum alloy), so that the end cap 24 is not prone to deform when squeezed or impacted. In this way, the battery cell 20 achieves higher structural strength and higher safety performance. Definitely, the end cap 24 may be made of a variety of materials such as copper, iron, aluminum, stainless steel, aluminum alloy, and plastic, without being particularly limited herein.

That the current collecting component 23 supports the end cap 24 means that, when the end cap 24 is placed onto the current collecting component 23, the current collecting component 23 provides a supporting force for the end cap 24 in a direction from the end cap 24 pointing away from the electrode assembly 22. In this way, the end cap 24 can rest statically on the current collecting component 23. Optionally, the end cap 24 may be supported on the first turned edge 232 of the current collecting component 23, or supported on the body portion 231 of the current collecting component 23.

Based on the above technical solution, the current collecting component 23 not only plays a role in leading out the current of the electrode assembly 22 to the housing 21, but also plays a role in supporting the end cap 24, so as to be ready for providing a supporting force for a subsequent operation of sealing the housing 21. In this way, without a need to additionally dispose on the housing 21 a roller track structure for supporting the end cap 24, the technical solution vacates the space occupied by the roller track structure inside the housing 21, and effectively improves the space utilization rate inside the battery cell 20, thereby effectively increasing the energy density of the battery cell 20.

In some embodiments of this application, referring to FIG. 6, a sealing layer 25 is disposed between the end cap 24 and the housing 21.

It is hereby noted that the sealing layer 25 comes in various forms. For example, the sealing layer 25 may be a sealing gasket made of a flexible material. After the end cap 24 fits and covers the housing 21, the sealing layer 25 abuts between the end cap 24 and the housing 21 to seal the clearance between the end cap 24 and the housing 21. The flexible material includes, but is not limited to, rubber or silicone. For another example, the sealing layer 25 is formed by coagulating a sealing glue. After the end cap 24 fits and covers the housing 21, the liquid-state sealing glue fills the space between the end cap 24 and the housing 21. The sealing glue coagulates to form a sealing layer 25 to seal the clearance between the end cap 24 and the housing 21.

The above technical solution effectively seals the clearance between the end cap 24 and the housing 21, thereby effectively improving the hermeticity of the battery cell 20.

In some embodiments of this application, the sealing layer 25 is a hot-melt adhesive layer.

Specifically, the hot-melt adhesive may be applied onto the end cap 24 first, or the hot-melt adhesive may be applied onto the housing 21 first. After the hot-melt adhesive coagulates, the end cap 24 is fitted onto the opening end 211 of the housing 21, and then the junction between the end cap 24 and the housing 21 is heated, so that the hot-melt adhesive is melted by heat. In this case, the liquid-state hot-melt adhesive sufficiently fills the clearance between the end cap 24 and the housing 21. The hot-melt adhesive coagulates again to form a sealing layer 25 to seal the clearance between the end cap 24 and the housing 21.

Based on the above technical solution, the hot-melt adhesive layer can effectively fill the clearance between the end cap 24 and the housing 21, thereby more effectively sealing the clearance between the end cap 24 and the housing 21, and further improving the hermeticity of the battery cell 20.

In some embodiments of this application, referring to FIG. 4 and FIG. 6, an edge of the opening end 211 is folded toward the interior of the housing 21 to form a second turned edge 2111. The second turned edge 2111 presses against the end cap 24.

A process of assembling the battery cell 20 is substantially as follows:
Connecting the tab 221 of the electrode assembly 22 to the current collecting component 23, and then assembling the components together into the housing 21; welding the first turned edge 232 of the current collecting component 23 to the housing 21, fitting the end cap 24 onto the opening end 211 of the housing 21, and letting the end cap be supported on the current collecting component 23; squeezing the edge of the opening end 211 of the housing 21 so as to fold the edge of the opening end 211 toward the interior of the housing 21 to form a second turned edge 2111. In this way, the second turned edge 2111 extends from the inner wall of the housing 21 toward the middle of the housing 21, and the second turned edge 2111 and the current collecting component 23 together clamp the end cap 24 to fix the end cap 24 into the opening end 211 of the housing 21.

Based on the above technical solution, the second turned edge 2111 can mate with the current collecting component 23 to clamp the end cap 24, so as to prevent the end cap 24 from falling off from the housing 21. This effectively increases the strength of assembling between the end cap 24 and the housing 21, and in turn, effectively improves the pressure resistance of the battery cell 20.

In some embodiments of this application, referring to FIG. 6, a surface, away from the current collecting component 23, of the end cap 24 is flush with a surface, away from the current collecting component 23, of the second turned edge 2111.

The surface, away from the current collecting component 23, of the end cap 24 means a surface, farthest away from the current collecting component 23, of the end cap 24. "A surface, away from the current collecting component 23, of the end cap 24 is flush with a surface, away from the current collecting component 23, of the second turned edge 2111" means that a distance H3 between the surface, away from the current collecting component 23, of the second turned edge 2111 and the second surface 2312 of the current collecting component 23 is equal to a distance H4 between the surface, away from the current collecting component 23, of the end cap 24 and the second surface 2312 of the current collecting component 23. In other words, the surface, away from the current collecting component 23, of the second turned edge 2111 is on the same horizontal level as the surface, away from the current collecting component 23, of the end cap 24.

In some other embodiments of this application, referring to FIG. 6, the surface, away from the current collecting component 23, of the end cap 24 is indented from the surface, away from the current collecting component 23, of the second turned edge 2111.

In other words, the distance H3 between the surface, away from the current collecting component 23, of the second turned edge 2111 and the second surface 2312 of the current collecting component 23 is greater than the distance H4 between the surface, away from the current collecting component 23, of the end cap 24 and the second surface 2312 of the current collecting component 23.

Based on the above technical solution, the end cap 24 is caused not to protrude out of the second turned edge 2111, thereby reducing the risk of damage caused to the end cap 24 by collision with an external object, and in turn, effectively improving the reliability of the battery cell 20 in use.

In some embodiments of this application, referring to FIG. 6, a sealing layer 25 is disposed between the end cap 24 and the second turned edge 2111.

Specifically, the sealing layer 25 may fill only the clearance between the surface, away from the current collecting component 23, of the end cap 24 and the surface, directly facing the end cap 24, of the second turned edge 2111; or may fill: (i) the clearance between the surface, away from the current collecting component 23, of the end cap 24 and the surface, directly facing the end cap 24, of the second turned edge 2111; and (ii) the clearance between the outer sidewall of the end cap 24 and the inner wall of the housing 21, concurrently.

The above technical solution effectively seals the clearance between the end cap 24 and the second turned edge 2111, thereby effectively improving the hermeticity of the battery cell 20.

In some embodiments of this application, the sealing layer 25 is a hot-melt adhesive layer.

Based on the above technical solution, the hot-melt adhesive layer can effectively fill the clearance between the end cap 24 and the second turned edge 2111, thereby more effectively sealing the clearance between the end cap 24 and the second turned edge 2111, and further improving the hermeticity of the battery cell 20.

In the present application, referring to FIG. 6, the end cap 24 is supported on the first turned edge 232 so that the end cap 24 is partitioned off from the body portion 231 to form a cushion space 27.

The end cap 24 may be supported on one side, away from the body portion 231, of the first turned edge 232. When the first turned edge 232 extends obliquely from the body portion 231 away from the central axis 234 of the body portion 231, the end cap 24 may be supported on one side, away from the inner wall of the housing 21, of the first turned edge 232.

Based on the above technical solution, in sealing the housing 21, the cushion space 27 can cushion the force between the end cap 24 and the current collecting component 23 to some extent, and effectively reduce the risk of fracturing at a weld joint between the current collecting component 23 and the housing 21, thereby further improving the yield rate of the battery cell 20.

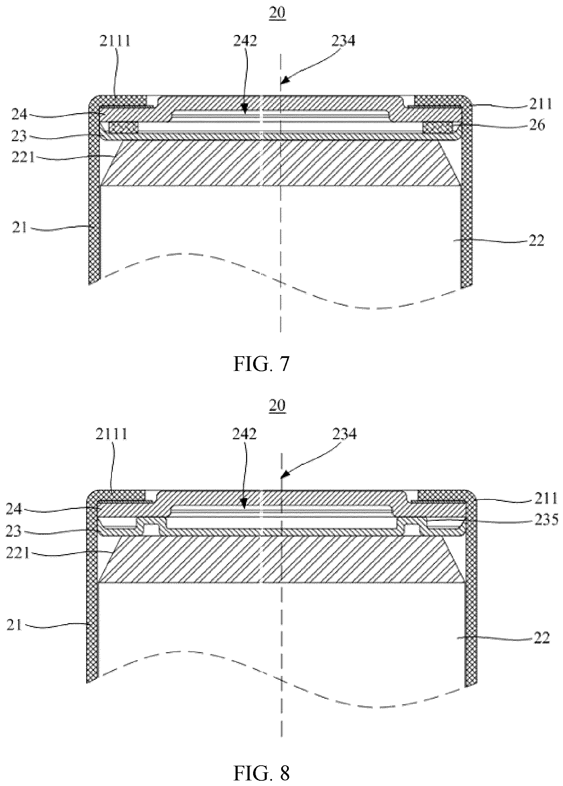

In some embodiments of this application, referring to FIG. 7, the battery cell 20 further includes a cushion 26. The cushion 26 abuts between the end cap 24 and the current collecting component 23.

The cushion 26 is a flexible piece. In other words, the cushion 26 is made of a flexible material. The flexible material includes, but is not limited to, rubber, silicone, and the like. Optionally, the cushion 26 may be a ring-shaped one-piece component, and the cushion 26 is disposed around the central axis 234 of the body portion 231. Alternatively, the cushion 26 may be a discrete component, and specifically, the cushion 26 includes a plurality of cushion bodies. The plurality of cushion bodies are evenly distributed around the central axis 234 of the body portion 231.

That the cushion 26 abuts between the end cap 24 and the current collecting component 23 means that one end face of the cushion 26 is in contact with the end cap 24 and the other end face of the cushion 26 is in contact with the current collecting component 23.

Based on the above technical solution, in sealing the housing 21, a squeezing force is transmitted through the end cap 24 to the cushion 26, so that the cushion 26 deforms in response to the force to cushion the force between the end cap 24 and the current collecting component 23 to some extent, thereby effectively reducing the risk of fracturing at the weld joint between the current collecting component 23 and the housing 21, and in turn, further improving the yield rate of the battery cell 20.

In some embodiments of this application, referring to FIG. 8, the current collecting component 23 protrudes out on a side close to the end cap 24 to form a first cushion portion 235. The first cushion portion 235 abuts against the end cap 24.

Specifically, the first cushion portion 235 assumes a hollow structure, so that the first cushion portion 235 is elastically deformable to some extent. In addition, the first cushion portion 235 also assumes an ring structure. The first cushion portion 235 is disposed around the central axis 234 of the body portion 231.

It is hereby noted that the first cushion portion 235 may be formed in a variety of manners. For example, the current collecting component 23 may be squeezed on a side close to the electrode assembly 22 by stamping, so that the current collecting component 23 protrudes toward the end cap 24 to form the first cushion portion 235. For another example, the current collecting component 23 may protrude on a side close to the end cap 24 by cast molding to form the first cushion portion 235.

Before the housing 21 is sealed, the end cap 24 may be supported on the first cushion portion 235. In sealing the housing 21, a squeezing force is transmitted through the end cap 24 to the first cushion portion 235, so that the first cushion portion 235 deforms in response to the force to cushion the force between the end cap 24 and the current collecting component 23 to some extent, thereby effectively reducing the risk of fracturing at the weld joint between the current collecting component 23 and the housing 21, and in turn, further improving the yield rate of the battery cell 20.

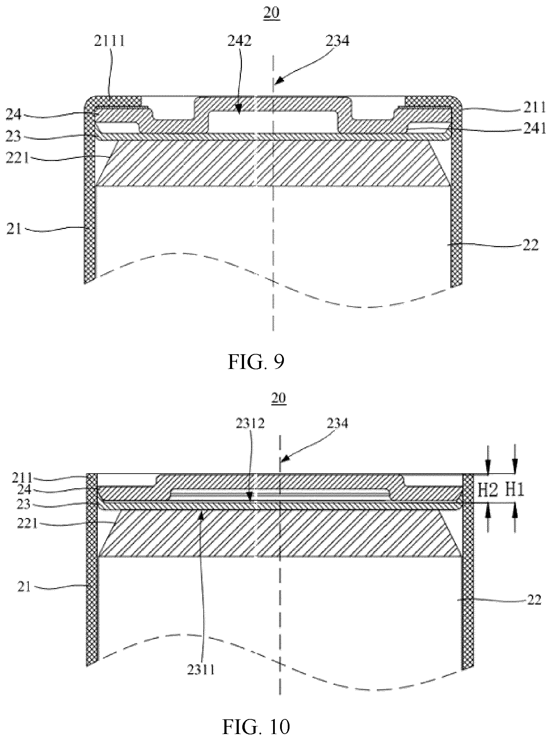

In some embodiments of this application, referring to FIG. 9, the end cap 24 protrudes out on a side close to the current collecting component 23 to form a second cushion portion 241. The second cushion portion 241 abuts against the current collecting component 23.

Specifically, the second cushion portion 241 assumes a hollow structure, so that the second cushion portion 241 is elastically deformable to some extent. In addition, the second cushion portion 241 also assumes an ring structure. The second cushion portion 241 is disposed around the central axis of the end cap 24. When the battery cell 20 is assembled, regardless of the assembling tolerance, the central axis of the current collecting component 23 coincides with the central axis of the end cap 24. In other words, the central axis of the current collecting component 23 and the central axis of the end cap 24 may be the same imaginary line.

It is hereby noted that the second cushion portion 241 may be formed in a variety of manners. For example, the end cap 24 may be squeezed on a side away from the current collecting component 23 by stamping, so that the end cap 24 protrudes toward the current collecting component 23 to form the second cushion portion 241. For another example, the end cap 24 may protrude on a side close to the current collecting component 23 by cast molding to form the second cushion portion 241.

Before the housing 21 is sealed, the end cap 24 may be supported on the current collecting component 23, so that the second cushion portion 241 abuts against the current collecting component 23. In sealing the housing 21, a squeezing force is transmitted to the second cushion portion 241, so that the second cushion portion 241 deforms in response to the force to cushion the force between the end cap 24 and the current collecting component 23 to some extent, thereby effectively reducing the risk of fracturing at the weld joint between the current collecting component 23 and the housing 21, and in turn, further improving the yield rate of the battery cell 20.

In some embodiments of this application, referring to FIG. 4, the end cap 24 is recessed on a side close to the current collecting component 23 to form a cavity 242.

The number of cavities 242 may be one, and the cavity 242 assumes a ring structure, and is disposed around the central axis of the end cap 24. Alternatively, the number of cavities 242 may be plural, and the plurality of cavities 242 are evenly distributed around the central axis of the end cap 24.

The cavity 242 may be disposed at any position on one side of the end cap 24, the side being close to the current collecting component 23. For example, the cavity 242 may be disposed at a central position on one side of the end cap 24, the side being close to the current collecting component 23. For another example, the cavity 242 may be disposed at an edge position on one side of the end cap 24, the side being close to the current collecting component 23. Still for another example, when the number of the cavities 242 is plural, the cavities 242 may be disposed at a central position and an edge position separately on one side of the end cap 24, the side being close to the current collecting component 23.

It is hereby noted that the cavity 242 may be formed in a variety of manners. For example, the end cap 24 may be squeezed on a side close to the current collecting component 23 by stamping, so that the end cap 24 is recessed on the side close to the current collecting component 23 to form the cavity 242. For another example, the cavity 242 may be formed on one side of the end cap 24 by cast molding, the side being close to the current collecting component 23.

Based on the above technical solution, the internal space of the battery cell 20 is effectively increased, so that more electrolyte solution can be stored inside the battery cell 20, thereby effectively improving the charge-discharge cycle performance of the battery cell 20.

In some embodiments of this application, referring to FIG. 10, a surface, away from the current collecting component 23, of the end cap 24 is flush with an end face of the opening end 211.

"A surface, away from the current collecting component 23, of the end cap 24 is flush with an end face of the opening end 211" means that a distance H1 between the end face of the opening end 211 and the second surface 2312 of the current collecting component 23 is equal to a distance H2 between the surface, away from the current collecting component 23, of the end cap 24 and the second surface 2312 of the current collecting component 23. In other words, the end face of the opening end 211 is on the same horizontal level as the surface, away from the current collecting component 23, of the end cap 24.

In some other embodiments of this application, referring to FIG. 10, the surface, away from the current collecting component 23, of the end cap 24 is recessed in the opening end 211.

In other words, the distance H1 between the end face of the opening end 211 and the second surface 2312 of the current collecting component 23 is greater than the distance H2 between the surface, away from the current collecting component 23, of the end cap 24 and the second surface 2312 of the current collecting component 23.

Based on the above technical solution, the end cap 24 is caused not to protrude out of the opening end 211 of the housing 21, thereby reducing the risk of damage caused to the end cap 24 by collision with an external object, and in turn, effectively improving the reliability of the battery cell 20 in use.

## Claims

1. A battery cell (20), **characterized in that** the battery cell (20) comprises: a housing (21), an electrode assembly (22), and a current collecting component (23), wherein both the electrode assembly (22) and the current collecting component (23) are accommodated in the housing (21), the current collecting component (23) is electrically connected to the electrode assembly (22), the current collecting component (23) comprises a body portion (231) and a first turned edge (232) disposed around the body portion (231), the first turned edge (232) protrudes away from the electrode assembly (22) from the body portion (231), and the first turned edge (232) is welded to an inner peripheral wall of the housing (21)
**characterized in that** the battery cell (20) further comprises an end cap (24), the housing (21) comprises an opening end (211), the end cap (24) fits and covers the opening end (211), and the current collecting component (23) is configured to support the end cap (24);
wherein the end cap (24) is supported on the first turned edge (232) so that the end cap (24) is partitioned off from the body portion (231) to form a cushion space.

2. The battery cell (20) according to claim 1, **characterized in that** the first turned edge (232) comprises a connecting face welded to the inner peripheral wall of the housing (21), and a dimension of the connecting face along a thickness direction of the body portion (231) is larger than a thickness dimension of the body portion (231).

3. The battery cell (20) according to claim 1, **characterized in that** a chamfer structure (233) is disposed on one side of the current collecting component (23), the side being close to the electrode assembly (22); and the chamfer structure (233) is disposed on an outer peripheral edge of the current collecting component (23); wherein the first turned edge (232) extends obliquely from the body portion (231) away from a central axis (234) of the body portion (231) to form the chamfer structure (233), and the first turned edge (232) presses against an inner wall of the housing (21).

4. The battery cell (20) according to claim 1, **characterized in that** a sealing layer (25) is disposed between the end cap (24) and the housing (21); wherein the sealing layer (25) is a hot-melt adhesive layer.

5. The battery cell (20) according to claim 1, **characterized in that** an edge of the opening end (211) is folded toward an interior of the housing (21) to form a second turned edge (2111), and the second turned edge (2111) presses against the end cap (24).

6. The battery cell (20) according to claim 5, **characterized in that**
a surface, away from the current collecting component (23), of the end cap (24) is flush with a surface, away from the current collecting component (23), of the second turned edge (2111); or
a surface, away from the current collecting component (23), of the end cap (24) is indented from a surface, away from the current collecting component (23), of the second turned edge (2111).

7. The battery cell (20) according to claim 5, **characterized in that** a sealing layer (25) is disposed between the end cap (24) and the second turned edge (2111); wherein the sealing layer (25) is a hot-melt adhesive layer.

8. The battery cell (20) according to claim 1, **characterized in that** the battery cell (20) further comprises a cushion (26), and the cushion (26) abuts between the end cap (24) and the current collecting component (23).

9. The battery cell (20) according to claim 1, **characterized in that** the current collecting component (23) protrudes out on a side close to the end cap (24) to form a first cushion portion (235), and the first cushion portion (235) abuts against the end cap (24).

10. The battery cell (20) according to claim 1, **characterized in that** the end cap (24) protrudes out on a side close to the current collecting component (23) to form a second cushion portion (241), and the second cushion portion (241) abuts against the current collecting component (23).

11. The battery cell (20) according to claim 1, **characterized in that** the end cap (24) is recessed on a side close to the current collecting component (23) to form a cavity (242); or
a surface, away from the current collecting component (23), of the end cap (24) is flush with an end face of the opening end (211); or
a surface, away from the current collecting component (23), of the end cap (24) is recessed in the opening end (211).

12. A battery (100), **characterized in that** the battery (100) comprises the battery cell (20) according to any one of claims 1 to 11.

13. An electrical device, **characterized in that** the electrical device comprises the battery (100) according to claim 12.

## Patentansprüche

1. Batteriezelle (20), **dadurch gekennzeichnet, dass** die Batteriezelle (20) umfasst: ein Gehäuse (21), eine Elektrodenanordnung (22) und eine Stromsammlerkomponente (23), wobei sowohl die Elektrodenanordnung (22) als auch die Stromsammlerkomponente (23) im Gehäuse (21) aufgenommen sind, die Stromsammlerkomponente (23) elektrisch mit der Elektrodenanordnung (22) verbunden ist, die Stromsammlerkomponente (23) einen Körperabschnitt (231) und einen ersten umgebogenen Rand (232) aufweist, der um den Körperabschnitt (231) angeordnet ist, der erste umgebogene Rand (232) sich vom Körperabschnitt (231) weg und von der Elektrodenanordnung (22) weg erstreckt, und der erste umgebogene Rand (232) mit einer inneren Umfangswand des Gehäuses (21) verschweißt ist,
**dadurch gekennzeichnet, dass** die Batteriezelle (20) ferner eine Endkappe (24) umfasst, das Gehäuse (21) ein offenes Ende (211) aufweist, die Endkappe (24) an das offene Ende (211) angepasst ist und dieses abdeckt, und die Stromsammlerkomponente (23) so ausgebildet ist, dass sie die Endkappe (24) abstützt;
wobei die Endkappe (24) auf dem ersten umgebogenen Rand (232) abgestützt ist, sodass die Endkappe (24) vom Körperabschnitt (231) getrennt ist, um einen Pufferraum zu bilden.

2. Batteriezelle (20) nach Anspruch 1, **dadurch gekennzeichnet, dass** der erste umgebogene Rand (232) eine Verbindungsfläche umfasst, die mit der inneren Umfangswand des Gehäuses (21) verschweißt ist, und dass eine Abmessung der Verbindungsfläche entlang einer Dickenrichtung des Körperabschnitts (231) größer ist als eine Dickenabmessung des Körperabschnitts (231).

3. Batteriezelle (20) nach Anspruch 1, **dadurch gekennzeichnet, dass** an einer der Elektrodenanordnung (22) zugewandten Seite der Stromsammlerkomponente (23) eine Fasenstruktur (233) angeordnet ist; und dass die Fasenstruktur (233) an einer äußeren Umfangskante der Stromsammlerkomponente (23) angeordnet ist; wobei sich der erste umgebogene Rand (232) schräg vom Körperabschnitt (231) weg und von einer zentralen Achse (234) des Körperabschnitts (231) weg erstreckt, um die Fasenstruktur (233) zu bilden, und der erste umgebogene Rand (232) gegen eine innere Wand des Gehäuses (21) anliegt.

4. Batteriezelle (20) nach Anspruch 1, **dadurch gekennzeichnet, dass** zwischen der Endkappe (24) und dem Gehäuse (21) eine Dichtungsschicht (25) angeordnet ist; wobei die Dichtungsschicht (25) eine Heißschmelzkleberschicht ist.

5. Batteriezelle (20) nach Anspruch 1, **dadurch gekennzeichnet, dass** ein Rand des offenen Endes (211) nach innen in das Gehäuse (21) umgebogen ist, um einen zweiten umgebogenen Rand (2111) zu bilden, und dass der zweite umgebogene Rand (2111) gegen die Endkappe (24) anliegt.

6. Batteriezelle (20) nach Anspruch 5, **dadurch gekennzeichnet, dass**
eine von der Stromsammlerkomponente (23) abgewandte Oberfläche der Endkappe (24) bündig mit einer von der Stromsammlerkomponente (23) abgewandten Oberfläche des zweiten umgebogenen Randes (2111) ist; oder
eine von der Stromsammlerkomponente (23) abgewandte Oberfläche der Endkappe (24) gegenüber einer von der Stromsammlerkomponente (23) abgewandten Oberfläche des zweiten umgebogenen Randes (2111) eingezogen ist.

7. Batteriezelle (20) nach Anspruch 5, **dadurch gekennzeichnet, dass** zwischen der Endkappe (24) und dem zweiten umgebogenen Rand (2111) eine Dichtungsschicht (25) angeordnet ist; wobei die Dichtungsschicht (25) eine Heißschmelzkleberschicht ist.

8. Batteriezelle (20) nach Anspruch 1, **dadurch gekennzeichnet, dass** die Batteriezelle (20) ferner ein Polster (26) umfasst, und dass das Polster (26) zwischen der Endkappe (24) und der Stromsammlerkomponente (23) anliegt.

9. Batteriezelle (20) nach Anspruch 1, **dadurch gekennzeichnet, dass** die Stromsammlerkomponente (23) auf einer der Endkappe (24) zugewandten Seite hervorsteht, um einen ersten Pufferabschnitt (235) zu bilden, und dass der erste Pufferabschnitt (235) gegen die Endkappe (24) anliegt.

10. Batteriezelle (20) nach Anspruch 1, **dadurch gekennzeichnet, dass** die Endkappe (24) auf einer der Stromsammlerkomponente (23) zugewandten Seite hervorsteht, um einen zweiten Pufferabschnitt (241) zu bilden, und dass der zweite Pufferabschnitt (241) gegen die Stromsammlerkomponente (23) anliegt.

11. Batteriezelle (20) nach Anspruch 1, **dadurch gekennzeichnet, dass** die Endkappe (24) auf einer der Stromsammlerkomponente (23) zugewandten Seite eingezogen ist, um einen Hohlraum (242) zu bilden; oder
eine von der Stromsammlerkomponente (23) abgewandte Oberfläche der Endkappe (24) bündig mit einer Stirnfläche des offenen Endes (211) ist; oder
eine von der Stromsammlerkomponente (23) abgewandte Oberfläche der Endkappe (24) in das offene Ende (211) eingezogen ist.

12. Batterie (100), **dadurch gekennzeichnet, dass** die Batterie (100) die Batteriezelle (20) nach einem der Ansprüche 1 bis 11 umfasst.

13. Elektrische Vorrichtung, **dadurch gekennzeichnet, dass** die elektrische Vorrichtung die Batterie (100) nach Anspruch 12 umfasst.

## Revendications

1. Une cellule de batterie (20), **caractérisée en ce que** la cellule de batterie (20) comprend : un boîtier (21), un ensemble d'électrodes (22) et un composant collecteur de courant (23), dans laquelle l'ensemble d'électrodes (22) et le composant collecteur de courant (23) sont tous deux logés dans le boîtier (21), le composant collecteur de courant (23) étant électriquement connecté à l'ensemble d'électrodes (22), le composant collecteur de courant (23) comprenant une partie de corps (231) et un premier bord replié (232) disposé autour de la partie de corps (231), le premier bord replié (232) faisant saillie à partir de la partie de corps (231) en s'éloignant de l'ensemble d'électrodes (22), et le premier bord replié (232) étant soudé à une paroi périphérique interne du boîtier (21),
**caractérisée en ce que** la cellule de batterie (20) comprend en outre un capuchon d'extrémité (24), le boîtier (21) comprenant une extrémité ouverte (211), le capuchon d'extrémité (24) étant ajusté pour s'adapter à l'extrémité ouverte (211) et la recouvrir, et le composant collecteur de courant (23) étant configuré pour supporter le capuchon d'extrémité (24) ;
dans laquelle le capuchon d'extrémité (24) est supporté sur le premier bord replié (232), de sorte que le capuchon d'extrémité (24) est séparé de la partie de corps (231) afin de former un espace tampon.

2. La cellule de batterie (20) selon la revendication 1, **caractérisée en ce que** le premier bord replié (232) comprend une face de connexion soudée à la paroi périphérique interne du boîtier (21), et qu'une dimension de la face de connexion selon une direction d'épaisseur de la partie de corps (231) est supérieure à une dimension d'épaisseur de la partie de corps (231).

3. La cellule de batterie (20) selon la revendication 1, **caractérisée en ce qu'**une structure chanfreinée (233) est disposée sur un côté du composant collecteur de courant (23), ledit côté étant proche de l'ensemble d'électrodes (22) ; et **en ce que** la structure chanfreinée (233) est disposée sur un bord périphérique externe du composant collecteur de courant (23) ; dans laquelle le premier bord replié (232) s'étend de manière oblique à partir de la partie de corps (231) en s'éloignant d'un axe central (234) de la partie de corps (231) afin de former la structure chanfreinée (233), et le premier bord replié (232) est en appui contre une paroi interne du boîtier (21).

4. La cellule de batterie (20) selon la revendication 1, **caractérisée en ce qu'**une couche d'étanchéité (25) est disposée entre le capuchon d'extrémité (24) et le boîtier (21) ; dans laquelle la couche d'étanchéité (25) est une couche adhésive thermofusible.

5. La cellule de batterie (20) selon la revendication 1, **caractérisée en ce qu'**un bord de l'extrémité ouverte (211) est replié vers l'intérieur du boîtier (21) afin de former un deuxième bord replié (2111), et le deuxième bord replié (2111) est en appui contre le capuchon d'extrémité (24).

6. La cellule de batterie (20) selon la revendication 5, **caractérisée en ce que**
une surface du capuchon d'extrémité (24) éloignée du composant collecteur de courant (23) est affleurante avec une surface du deuxième bord replié (2111) éloignée du composant collecteur de courant (23) ; ou
une surface du capuchon d'extrémité (24) éloignée du composant collecteur de courant (23) est en retrait par rapport à une surface du deuxième bord replié (2111) éloignée du composant collecteur de courant (23).

7. La cellule de batterie (20) selon la revendication 5, **caractérisée en ce qu'**une couche d'étanchéité (25) est disposée entre le capuchon d'extrémité (24) et le deuxième bord replié (2111) ; dans laquelle la couche d'étanchéité (25) est une couche adhésive thermofusible.

8. La cellule de batterie (20) selon la revendication 1, **caractérisée en ce que** la cellule de batterie (20) comprend en outre un coussinet (26), et le coussinet (26) est en appui entre le capuchon d'extrémité (24) et le composant collecteur de courant (23).

9. La cellule de batterie (20) selon la revendication 1, **caractérisée en ce que** le composant collecteur de courant (23) fait saillie du côté proche du capuchon d'extrémité (24) afin de former une première partie tampon (235), et la première partie tampon (235) est en appui contre le capuchon d'extrémité (24).

10. La cellule de batterie (20) selon la revendication 1, **caractérisée en ce que** le capuchon d'extrémité (24) fait saillie du côté proche du composant collecteur de courant (23) afin de former une deuxième partie tampon (241), et la deuxième partie tampon (241) est en appui contre le composant collecteur de courant (23).

11. La cellule de batterie (20) selon la revendication 1, **caractérisée en ce que** le capuchon d'extrémité (24) est en retrait du côté proche du composant collecteur de courant (23) afin de former une cavité (242) ; ou
une surface du capuchon d'extrémité (24) éloignée du composant collecteur de courant (23) est affleurante avec une face d'extrémité de l'extrémité ouverte (211) ; ou
une surface du capuchon d'extrémité (24) éloignée du composant collecteur de courant (23) est en retrait dans l'extrémité ouverte (211).

12. Une batterie (100), **caractérisée en ce que** la batterie (100) comprend la cellule de batterie (20) selon l'une quelconque des revendications 1 à 11.

13. Un dispositif électrique, **caractérisé en ce que** le dispositif électrique comprend la batterie (100) selon la revendication 12.
